# EUROPEAN PATENT APPLICATION

(11) **EP 2 759 965 A1**
(43) Date of publication of application: **30.07.2014**
(21) Application number: 14152878.6
(22) Date of filing: 28.01.2014
(51) Int. Cl.: G06Q 10/06

(54) **Method and apparatus for designing a system architecture**

(30) Priority: 28.01.2013 IN CH03562013
(71) Applicant: Polaris Financial Technology Limited, 600 006 Chennai (IN)
(72) Inventor: Jain, Arun, 600 028 Puram, Chennai (IN)
(74) Representative: Jansen, Cornelis Marinus

(57) **Abstract**

Embodiments for designing banking system architecture are disclosed. A system comprises a banking solutions architecture module comprising a product component, a services component, and a process component. A comparison module compares a banking solution requirement with at least one component of the banking solutions architecture, and a design module designs a new banking software based on the comparison, wherein the design module configures the at least one component based on the output of the comparison module.

## Description

### BACKGROUND OF THE INVENTION

### Field of the Invention

Embodiments of the present invention generally relate to designing systems, and more particularly, to a method and apparatus for designing system architecture.

### Description of the Related Art

Currently, various industrial or organizational functions, e.g. manufacturing to banking, are organized in several different ways across the industry. Typically, such systems are designed around a particular organization's existing needs, and with time additions are made on an as required basis. Currently, most such solutions tend to be highly fragmented, and become complex and counterintuitive. For example, several organizations in a similar industry, e.g. banks and financial institutions, use widely different solutions for different needs or operations, and from time to time need to upgrade their systems for a variety of functionality. Most organizational functions and their inter-relations and interdependencies are complex and not easy to understand, or intuitive. Banking systems, for example, systems that use software and hardware, which are required to be designed in alignment with a particular organization's functions, are designed with the handicap of such unclarity as related above.

Such piecemeal approach has several drawbacks. Foremost, the aggregate of such different solutions usually does not provide an exhaustive set of solutions. Lack of interoperability between different software solutions inhibits functionality and effectiveness of a bank or a financial institution. Furthermore, such conventional approach keep most systems blind to what functionality they may be missing that could enhance their productivity, security, robustness and overall have a significant impact on their business.

Therefore, there is a need for improved method and apparatus for designing system architecture.

### SUMMARY

Embodiments for designing banking system architecture are disclosed. A system comprises a banking solutions architecture module comprising a product component, a process component, and a service component. A comparison module compares a banking solution requirement with at least one component of the banking solutions architecture, and a design module designs a new banking software based on the comparison, wherein the design module configures at least one component based on the output of the comparison module.

### BRIEF DESCRIPTION OF THE DRAWINGS

Figure 1 depicts a schematic diagram of an apparatus for designing a system architecture for banking solutions according to an embodiment of the present invention.
Figure 2 depicts a schematic diagram of an application server of Figure 1 according to an embodiment of the present invention.
Figure 3 depicts a schematic diagram of a client device of Figure 1 according to an embodiment of the present invention.
Figure 4 depicts a flow diagram of a method for designing architecture for banking solutions according to an embodiment of the present invention.
Figure 5 depicts a schematic representation of a predefined architecture for designing banking solutions, according to an embodiment of the present invention.
Figure 6 depicts a schematic representation of a predefined architecture for designing banking solutions, according to another embodiment of the present invention.

While the method and apparatus is described herein by way of example for several embodiments and illustrative drawings, those skilled in the art will recognize that the method and apparatus for designing a system architecture are not limited to the embodiments or drawings described. It should be understood, that the drawings and detailed description thereto are not intended to limit embodiments to the particular form disclosed. Rather, the intention is to cover all modifications, equivalents and alternatives falling within the spirit and scope of the method and apparatus for designing a system architecture as defined by the appended claims. Any headings used herein are for organizational purposes only and are not meant to limit the scope of the description or the claims. As used herein, the word "may" is used in a permissive sense (i.e., meaning having the potential to), rather than the mandatory sense (i.e., meaning must). Similarly, the words "include", "including", and "includes" mean including, but not limited to.

### DETAILED DESCRIPTION OF EMBODIMENTS

Embodiments of the present invention comprise method and apparatus for designing system architecture, such as banking solutions. The embodiments provide an easy, intuitive and comprehensive solution for all banking operations and all entities using such banking solutions.

Various embodiments of an apparatus and method for designing system architecture for banking solutions are described. In the following detailed description, numerous specific details are set forth to provide a thorough understanding of the disclosed subject matter. However, it will be understood by those skilled in the art that disclosed subject matter may be practiced without these specific details. In other instances, methods, apparatuses or systems that would be known by one of ordinary skill have not been described in detail so as not to obscure disclosed subject matter.

Some portions of the detailed description which follow are presented in terms of algorithms or symbolic representations of operations on binary digital signals stored within a memory of a specific apparatus or special purpose computing device or platform. In the context of this particular specification, the term specific apparatus or the like includes a general purpose computer once it is programmed to perform particular functions pursuant to instructions from program software. Algorithmic descriptions or symbolic representations are examples of techniques used by those of ordinary skill in the signal processing or related arts to convey the substance of their work to others skilled in the art. An algorithm is here, and is generally, considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared or otherwise manipulated. It has proven convenient at times, principally for reasons of common usage, to refer to such signals as bits, data, values, elements, symbols, characters, terms, numbers, numerals or the like. It should be understood, however, that all of these or similar terms are to be associated with appropriate physical quantities and are merely convenient labels. Unless specifically stated otherwise, as apparent from the following discussion, it is appreciated that throughout this specification discussions utilizing terms such as "processing," "computing," "calculating," "determining" or the like refer to actions or processes of a specific apparatus, such as a special purpose computer or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device.

Embodiments of the present invention provide method and apparatus for designing a system architecture for banking solutions. Advantageously, embodiments encompass all situations of a bank's solutions needs in a simple, intuitive, comprehensive and powerful manner using computing devices that include, but are not limited to, tablet PCs, laptops, desktops, mobile phones, PDAs and similar devices having a processing device, a display unit and input/output unit, and a communication device to connect to other remote devices.

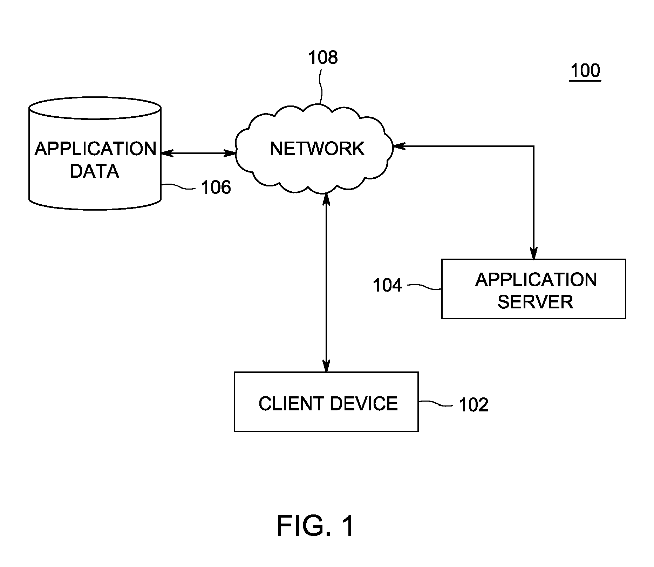

Figure 1 depicts a block diagram showing an apparatus 100 for designing architecture for banking solutions, according to one or more embodiments of the invention. The apparatus 100 comprises at least one client device 102, an application server 104, application data 106 and a network 108.

In some embodiments, the network 108 may include one or more networks including but not limited to Local Area Networks (LANs) (e.g., an Ethernet or corporate network), Wide Area Networks (WANs) (e.g., the Internet), wireless data networks, some other electronic data network, or some combination thereof. In various embodiments, network interface may support communication via wired or wireless general data networks, such as any suitable type of Ethernet network, for example; via telecommunications/telephony networks such as analog voice networks or digital fiber communications networks; via storage area networks, such as Fiber Channel SANs, or via any other suitable type of network and/or protocol.

The client device 102, the application server 104 and the data storage 106 are computing devices configured for exchanging digital content over the network 108, processing and displaying such content and providing a user interface. The client device 102 is a computing device used for capturing a bank's solution requirements and recommending a designed architecture. The application server 104 is a computing device that designs architecture for banking solutions based on the current status of a bank's solution infrastructure, a predefined banking solutions architecture and customization requirements of the bank. As used herein, the term "bank" and "financial institutions" or derivatives thereof shall be interpreted as being one and the same unless indicated otherwise. The application data 106 includes predefined banking solution architecture and associated details. Those skilled in the art will appreciate that the various functionalities of the client device 102, the application server 104 and the application data 106 can be readily configured differently, for example, using the devices of the apparatus 100 for different functionality, or using other devices (not shown) communicably coupled to the network 108 to achieve these functionalities, and similar such configurations, which are included within the scope and spirit of the invention.

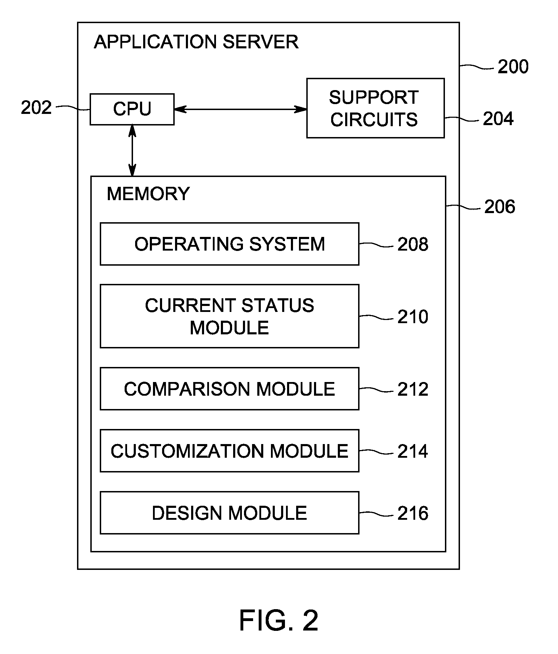

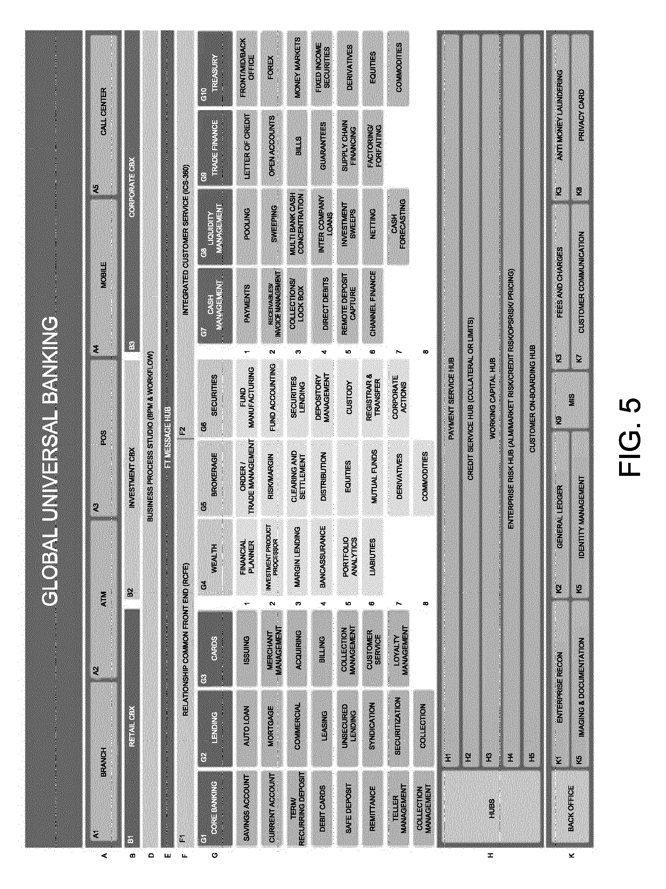

Figure 2 depicts a block diagram of an application server 200 for designing architecture for banking solutions, for example, similar to the application server 104 of Figure 1, according to one or more embodiments of the invention. In some embodiments, the application server 200 is a type of computing device (e.g., a laptop, a desktop, a Personal Digital Assistant (PDA) and/or the like) known to one of ordinary skill in the art, and generally described with respect to Figure 5 herein. The CPU 202 may comprise one or more commercially available microprocessors or microcontrollers that facilitate data processing and storage. The various support circuits 204 facilitate the operation of the CPU 202 and include one or more clock circuits, for example a meeting timer, power supplies, cache, input/output circuits, displays, including touch sensitive displays and the like. The application server 200 further includes a memory 206. The memory 206 comprises at least one of Read Only Memory (ROM), Random Access Memory (RAM), disk drive storage, optical storage, removable storage and/or the like. The memory 206 includes an Operating System (OS) 208, a current status module 210, a comparison module 212, a customization module 214, and a design module 216. In one embodiment (not shown) the application server 200 includes application data storage, similar to the application data 106 of Figure 1.

According to some embodiments, the operating system (OS) 208 generally manages various computer resources (e.g., network resources, file processors, and/or the like). The operating system 208 is configured to execute operations on one or more hardware and/or software modules, such as Network Interface Cards (NICs), hard disks, virtualization layers, firewalls and/or the like. Examples of the operating system 208 may include, but are not limited to, Linux, Mac OSX, BSD, UNIX, Microsoft Windows, and the like.

According to some embodiments, the current status module 210 captures current status of solution(s) employed by a bank in one or more area of the bank's needs. In one embodiment, the current status module 210 receives information on the current status of the banking solution from the client device 102 of Figure 1 over the network 108. In another embodiment, information on the current status of the banking solution is provided directly to the current status module 210.

According to some embodiments, the comparison module 212 compares between the current state of solution(s) used by bank for a particular bank need and the corresponding solution provided by the predefined banking solution architecture, for example, as provided by the application data 106. The comparison module 212 identifies one or more differences between the current state of the solution(s) employed by the bank and the corresponding solution of the predefined banking solution architecture.

The customization module 214 captures customization required, if any, according to the bank's needs, according to various embodiments. According to some embodiments, the customization module 214 captures notes relating to a particular situation, implementation or process of the bank. In some embodiments, there may not be a customization, for example, if a bank wishes to adopt the predefined banking solution architecture completely, or if the bank is starting a new function completely. In such embodiments, the customization module 214 is not used.

According to various embodiments, the design module 216 designs a solution architecture for the bank based on the comparison and the customization, if any. The design module 216 configures the design to mitigate any deficiencies or inefficiencies detected from the comparison, and further configures the design to accommodate for the customization.

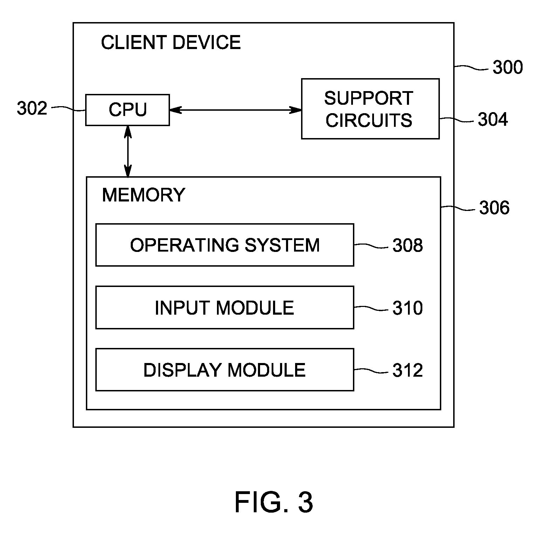

Figure 3 depicts a schematic diagram of a client device 300, similar to the client device 102 of Figure 1, according to an embodiment of the present invention. The client device 300 is a computing device such as those generally known in the art and generally described with respect to Figure 5 herein. The client device 300 receives input from a user of the client device 300. Users of the client device 300 include product or solution manager, for example, who assist in designing an architecture for a banking solution according to a bank's needs. In some embodiments, the users may directly interact with the application server 104 or 200 for the purpose of assisting in designing the architecture for a banking solution, and in such embodiments, the functionalities of the client device 300 are implemented by the application server.

The CPU 302 may comprise one or more commercially available microprocessors or microcontrollers that facilitate data processing and storage. The various support circuits 304 facilitate the operation of the CPU 302 and include one or more clock circuits, for example a meeting timer, power supplies, cache, input/output circuits, displays, including touch sensitive displays, touch sensitive input circuits and the like. The client device 300 further includes a memory 306. The memory 306 comprises at least one of Read Only Memory (ROM), Random Access Memory (RAM), disk drive storage, optical storage, removable storage and/or the like. The memory 306 includes an Operating System (OS) 308, an input module 310, and a display module 312.

According to some embodiments, the operating system (OS) 308 generally manages various computer resources (e.g., network resources, file processors, and/or the like). The operating system 308 is configured to execute operations on one or more hardware and/or software modules, such as Network Interface Cards (NICs), hard disks, virtualization layers, firewalls and/or the like. Examples of the operating system 308 may include, but are not limited to, Linux, Mac OSX, BSD, UNIX, Microsoft Windows, and the like.

According to various embodiments, the input module 310 receives input information relating a bank's needs for banking solutions, the current state of solutions used by the bank, and any customization details if applicable. The input module 310 communicates all such information to an application server, for example the application server 104 of Figure 1, for further processing. According to various embodiments, the display module 312 receives information with respect to the architecture design, for example from the application server 104 of Figure 1, and displays the details of the designed architecture of the banking solution.

According various embodiments, the application data 106 comprises the predefined architecture for banking solutions. The application data 106 may further store customization details, comparison details, implementation examples of the predefined architecture for banking solutions, and the like. According to various embodiments, the predefined architecture for banking solution is an architecture as described in Annexure 1, and referred to as the "Global Universal Banking" or "GUB" architecture, the details and usage of which are included within the scope of the present embodiments. The GUB architecture in Annexure 1 has been described with respect to embodiments not discussed with respect to the figures 1-4, and is presented by way of example, and not by way of limitation to the embodiments discussed herein. As such, embodiments discussed in Annexure 1 may or may not be consistent with the embodiments discussed with respect to Figures 1-4. However, any apparent inconsistencies can be readily accommodated by configuring the apparatus, its components, and/or the method correspondingly, as will occur readily to those skilled in the art, and all such variations are included within the scope and spirit of the present invention.

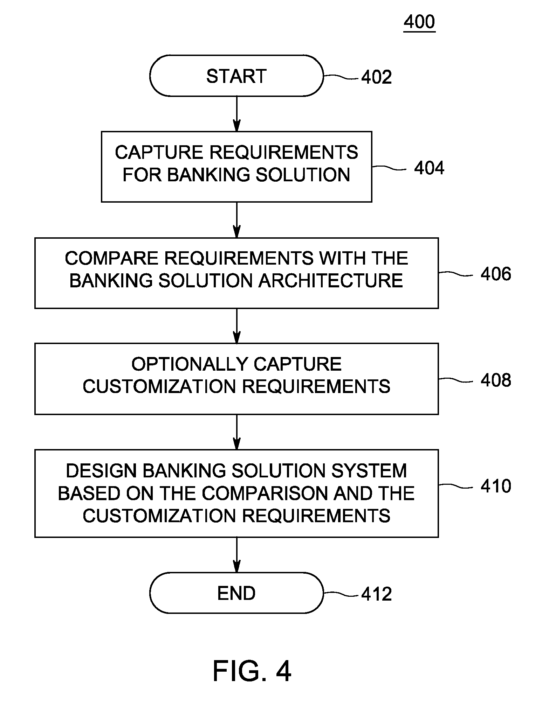

Figure 4 depicts a flow diagram of a method 400 for designing a system architecture for a banking solution, for example, using the system described in Figure 1, according to one or more embodiments of the invention.

The method 400 starts at step 402, and proceeds to step 404. At step 404, the method 400 receives requirements for a banking solution. In one embodiment, the requirements include a current state of the solution used by the bank, including the information that no current solution exists. The requirements include the objectives and functionalities required by the bank for a particular function. At step 406, the method 400 compares the requirements with the predefined architecture or components therein for banking solutions to determine the gaps, deficiencies, inefficiencies and any differences that can be treated. In various embodiments, the method 400 utilizes the banking solution architecture for the comparison, described in further detail subsequently. At step 408, the method 400 captures the customization requirements, if any. The method 400 proceeds to step 410 at which the method 400 designs an architecture for a banking solution for implementation by the bank, based on the bank's requirements, the current solution status, and the customization requirements. The method 400 ends at step 412.

Various embodiment of the present invention provide for an efficient predefined architecture for banking solutions. Advantageously, the inventor has devised the banking solution architecture/scheme for organizing banking functions in a comprehensive manner, which provides for superior description and organization of the various banking functions, and provides an intuitive and simpler understanding of the various banking functions. Various embodiments provide for creation of customized templates based on the banking solution architecture, for example, by adding relevant documents/ information related to a particular client requirement. Various embodiments allow for generating a recommendation template that presents a subset of the banking solution architecture adapted to the client's situation. Advantageously, the embodiments disclosed herein provide a hardware and software solution architecture based on the report in an "off the shelf" manner, and yet the solution is comprehensive and well customized to a bank's needs. The banking solution architecture is advantageous a comprehensive solution that covers all banking functions, an efficient solution that allows for simpler and faster customization, an effective solution that aligns with a bank's business imperatives readily by offering specific banking solution architecture modules, rather than forcing a "one-size fits all" approach, and is easy to use, since the embodiments design the solution for the bank in an objective and modular manner.

The banking solution architecture is organized into various levels as follows: Level 0 (L0) or Product Level which includes multiple predefined product components. Each of the predefined product components is organized into Level 1 (L1) or Process level, which includes multiple predefined process components. Each of the predefined process components is organized into Level 2 (L2) or Services level, which includes multiple predefined services components. Each of the predefined services components is organized into Level 3 (L3) or Scenario level, which includes multiple predefined scenario components, e.g. including Artifact Screen Shots, Program Specs and the like. Further, the baking solution architecture allows for 'wiring' the various banking solution modules in a traceable manner, for example, relationship and interoperability parameters with parent and children modules can be traced. The banking solution architecture embodies an in-depth understanding of how banking happens today. An embodiment of the banking solution architecture is described in further detail below, and the "banking solution architecture" is also referred to as "global universal banking (GUB) architecture" and for the purpose of this discussion, the terms have been used interchangeably.

Banking Solution Architecture or Global Universal banking (GUB) and Global Transaction Banking (GTB)

Embodiments illustrating the GUB approach and its use are presented. GUB enables a comprehensive solutioning approach for designing banking systems. According to some embodiments, GUB' solutioning approach is detailed by GTB for certain applications. GUB provides a unique methodology for documenting, cataloguing, assessing and diagnosing the functionality of banks and financial institutions. The solutioning approach of GUB identifies inefficiencies, missing functionality and designs solutions for functional assessment, core process depiction, application management and gap analysis. Advantageously, GUB approach would enhance operational efficiency of financial institutions, increase customer satisfaction and enable them to increase revenue. While the description below refers to one or more specific embodiments of the GUB architecture, obvious configurations and variations will occur readily to those skilled in the art and all such obvious variations are included within the scope and spirit of the invention as described by the various embodiments.

This methodology is based on the tenets of "Global Universal Banking" GUB model and the three level functional architecture of the bank or financial institution (L0/L1/L2/L3). The word "customers" subsequently refers to banking or financial institutions.

The GUB is a comprehensive repository of banking functionality. It summarizes the processes that are needed to run a bank and financial institution in a single view. It is easy to visualise that documenting the entire banking ecosystem would be a hugely complex process. However, the GUB model works with the central theme of Complexity reduction where by the objectives of comprehensiveness and simplicity are achieved by adopting the following three techniques of categorization:
a. Notation: Each of the functional components are denoted by an alphabet. Thus, the touchpoints / channels such as PoS, mobile, bank branch etc. are denoted by A. Portals are denoted by B. In a similar manner, various components are notated using the alphabets A-K.
b. Numbering: Every individual component is uniquely identified by a number. Thus, the combination of the alphabet and number directly references a specific component. For example, within touch points / channels, which are collectively denoted by A, 4 refers to Mobile and therefore A4 specifically identifies to the Mobile Channel.
c. Colour coding: Groups of components have been assigned different colours, denoting solutions. Apart from ease of reference and enhancing readability, this helps in identifying the specific component to a type (such as Hubs - all of them denoted by pink) or a category (all of the Corporate Banking verticals in light blue)

Thus, by the combined use of numbers, notation and coloring, a unique taxonomy of banking functionality has been established, similar to the Periodic tables used in Chemistry, used for identification and description of chemicals. It covers all of the component classes of the banking system such as channels, interfaces, workflow applications, solutions for verticals, back end processes etc. This also facilitates documenting and grouping of the properties of each component in a structured manner. The structure lends itself amenable to future expansion, innovation and introduction of new components in the architecture.

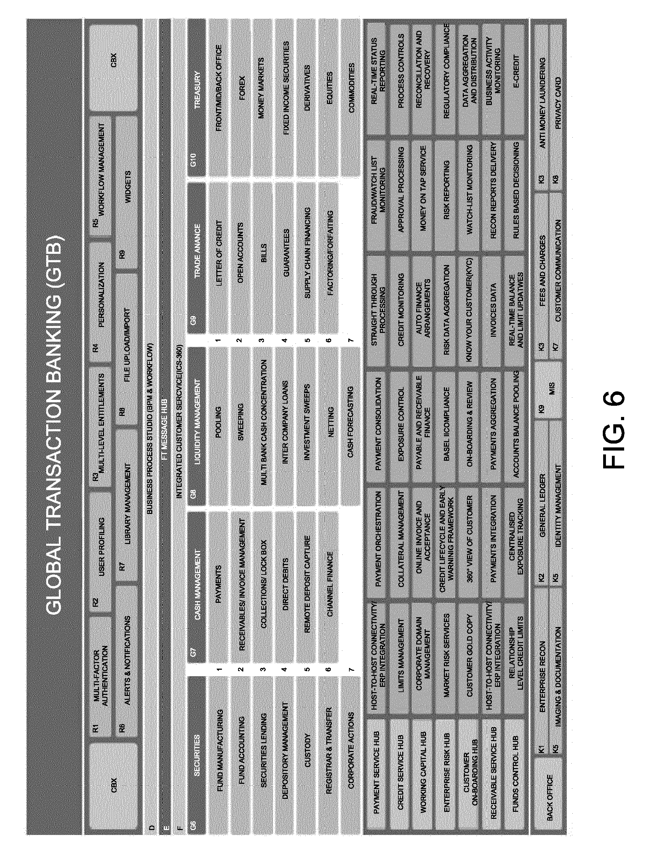

Figures 5 and 6 illustrate an embodiment each of the Global Universal Banking (GUB) architecture, and the Global Transaction Banking (GTB) Architecture. The banking solution architecture or GUB, for example as outlined above, presents the Level 0 of the Banking functional architecture. Specifically, the components under the class G represent the verticals or domains of a bank such as Cards, Lending, Wealth Management, Brokerage etc. These have been classified under three broad vertical categories viz. Retail, Investment and Corporate. A total of 5 verticals from G1-G10 have been delineated. Each Vertical is represented by a "Column". Under each column, there are individual cells, denoted as "Bricks". Each brick represents a function or a product - such as Mutual Funds or Cards Issuance or Term Deposits etc. The GTB is organized in a manner similar to the GUB.

There are certain components that operate across the verticals such as the Workflow, Messaging or the Hubs. These interact with more than one vertical. These are the "beams" of the architecture. Examples of the beams are the various types of Hubs.

At the next level, Level 1, each of the verticals from G1-G10 or the Hubs are further detailed to the next level in similar charts, each devoted for a specific vertical. In this case, the cells in the L0 level, often form separate columns themselves, representing sub-verticals or aggregration of products/ functions. Thus, for example, under the Vertical G3 Cards in the L0 chart, Acquisition, Loyalty etc are individual bricks. In the chart dedicated to Cards, Customer Acquisition and Loyalty Management form separate columns. Under each of these columns, individual bricks that refer to specific functions or processes such as co-brand conversions or PIN Generation and Authorisation are listed. In addition, specific interfaces, back end components and hubs that are relevant to the vertical are represented. This chart which is specific to a process is called the L1 representation. Further delineation of the L1 chart using the same methodology into greater granularity will give us the L2 chart for each service within the process.

Thus, this three level representation of the functional architecture enables deep dive into each vertical to the finest detail, while simultaneously being able to relate the linkages and relationships with other components in the overall architecture. The benefits of such a representation are discussed later in this submission.

According to an embodiment, the GUB model is used to design a banking system architecture. As an example, the following steps outline the structured process that is based on the GUB model and three level functional architecture, which is used to identify potential areas of improvement in the systems and processes of banking and financial institutions.
1. From the L0 page, the verticals that a Bank has operations / business in are identified. By mapping and matching the Bank's functional architecture to the model architecture, missing elements are identified, which are opportunities for expansion or new introduction of products/services..e.g. Introduction of a new channel, launching a new product, adopting a new process.
2. These specific verticals are identified for further study and review. Under each vertical, specific functionalities may also be chosen for deep dive analysis
3. In discussing with a customer to arrive at a proposal or a solution / proposition for them, the "as is" situation inclusive of factors such as existing systems, if any, business processes, costs, revenues, profitability, process cycle times, customer satisfaction levels, customer acquisition rate, account statistics, headcount employed etc are studied.
4. Based on the analysis of the above data, comparison with peer figures, industry averages, "best in class" benchmarks etc, opportunities are identified for improvement / scaling up.
5. Similarly, areas where the current systems / applications have deficiencies/ limitations are also identified and specific focused opportunities are zeroed down, where the systems need to be scaled up/ upgraded / replaced to support and meet business requirements and/ or comply with regulatory requirements
6. Another area of opportunity is that this methodology will also help in reducing complexity in the current systems and processes by a laser sharp diagnostics process that drills down to specific processes/ functions/ product performance in the financial institutions. Thus, the solution proposed would be sharply focused on a specific area of improvement.
7. These apart, this method also helps in decoding the linkages and relationships between various components in the architecture and perform impact analysis of any change to contain unintended consequences.

Based on the methodology delineated above, a recommendation put forth for a solution to the customer - be it a Financial technology rationalization or product offering, it has the several benefits.

Comprehensive: It ensures that all requirements are completely covered and there are no gaps or errors that would come up at a later stage of the solution roll-out as the functionality has been exhaustively detailed. There are therefore no ugly surprises in costs or time schedules.

Quicker/ More efficient: The structured methodology ensures that the solutioning is arrived at as well as implemented in a agile manner, with little scope for misses or subsequent add-on costs, thereby ensuring that the deployment is also more cost-effective

Wired and Integrated: The linking up of each of the verticals / applications and functionalities and the top level L0 view ensures that the cross-linkages are duly recognized and factored in solution building - so that disparate pieces of solution are not offered and all relevant issues are addressed across verticals and interfaces. It also ensures the connect between technology and business so that functionality and applications are matched at each level

Customized: Depending on the specific pain points identified by a specific customer or improvement opportunities identified / needs identified for expansion/ product / geography roll-out, the solution proposed is specific and sharply addresses the situation rather than a "one shirt fits all" approach where a standard product is rolled out irrespective of the uniqueness of situation

All of these would translate to better systems and processes, improved efficiencies, reduced costs, higher service levels - all of which lead to greater revenues and profitability for the customer.

In an embodiment, the banking solution architecture or GUB is used to design solution architecture for credit card customers. The following example illustrates the GUB Model and three level functional architecture as applied to Banks with Credit Card Operations:
1. While several banks offer credit cards and run Card operations, their relative positioning in the Market place and therefore their drivers for business performance / pain points could be entirely different
   a. Bank A, with an established brand and a significant card holder population may have an issue of managing delinquencies or preventing fraudulent usage of cards to reduce credit losses
   b. Bank B, which is a startup in the Cards Business, may have customer acquisition or proliferating card holders as the main agenda for revenue growth
   c. Bank C, whose cards find lesser acceptance in vendor outlets, may have merchant enlistment as their main growth driver, with a view of popularizing and advancing their card acceptance and usage
   d. Bank D, which competes aggressively to be a market leader, may focus on loyalty and reward systems to enhance adoption by customers or switchover from competing brands
2. Thus, while all of the Banks are focusing on one vertical viz. Cards, their priorities, growth drivers or challenges are hugely different, due to their relative position / stage in the product life cycle. As a result, the solution proposed to each of them would be different and specifically adapted to their business requirements. A standard product suite for the Cards business would not address these in the differentiated manner required. Therefore, a deep dive into the Cards business of each of the banks through analysis, discussions using the L1 methodology would result in offering specific products that focus on
   a. Collections and Fraud/ Risk Management in the case of bank A
   b. Customer acquisition for bank B
   c. Merchant Management for bank C and
   d. Loyalty Management for bank D
3. Again, with each of the above, specific functionalities may take preference over others
4. In rolling out the solution for these instances, new interface requirements and back-end processing needs may arise. For example, there would be a need to send out fraud alerts on mobiles. There would be inevitable accounting interfaces with the Bank's General Ledger, which will impact the accounting process. There may be external compliance requirements such as delinquency reporting to CIBIL in India. Such requirements have to be linked and stitched together in arriving at a solution so that there are no incremental patching or the solution is not rendered inadequate in that it does not address related requirements outside the vertical 5.
Adoption of the GUB model and three tier functional architecture ensures that the uniqueness of each of the above scenarios is recognized and addressed appropriately, while preserving the references to the broader canvas of banking system and addressing the relevant interfaces thereof.
6. The three step process as exemplified above is not limited to financial institutions and can be used to improve the performance of any business in any industry or service. The aforesaid example are intended to illustrate the specific application of the three level architecture to financial institutions and do not limit their scope to improving the performance of financial institutions alone. It will be readily apparent to skilled persons and can be appreciated that this method or variations of this method can be easily adopted to any business in any part of the world to improve its performance

In an embodiment, the banking solutions architecture is described as follows:
1. The Level 0 (L0) of the preferred embodiment of the present invention is more fully and particularly expressed in terms of a color coded workflow which comprises of 8 blocks A, B, D, E, F, G, H and K representing various lines of businesses in banking world.
2. Block A represents the various channel through which customers interact with the Bank and Financial Institutions. These include Branch (A1), ATM (A2), POS - Point of Sales (A3), Mobile (A4) and Call Center (A5).
3. Block B represents various portals like Retail Portal (B1), Investment Portal (B2) and Corporate Portal (B3). The integration layer between channel and banking systems are represented in Block D - Business Process Studio (BPM & Workflow), Block E - Financial Transaction Message Hub and Block F - Relationship Common Front End (RCFE) (F1) and Integrated Customer Service (ICS-360) (F2).
4. Block G forms the core business lines in Banking vertical under 5 key sub blocks which represent Core Banking (G1), Lending (G2), Cards (G3), Wealth (G4), Brokerage (G5), Securities (G6), Cash Management (G7), Liquidity Management (G8), Trade Finance (G9) and Treasury (G10). This is supported by common back-end services shown below the block & front-end services shown above the block in the Fig 1.
5. Block G1 comprising core banking which further comprises current or savings account, term or recurring deposit, debit cards, remittance, teller management and collection management.
6. Block G2 comprising lending which further comprises originations, unsecured lending (personal/consumer), secured (auto/mortgage), leasing, securitization, syndication, collection management and commercial lending.
7. Block G3 comprising cards and their management which further comprises originations, issuing, acquiring, loyalty, fraud early warning, association compliances and collection management.
8. Block G4 comprising wealth which further comprises prospect management, financial planner, investment product processor, margin lending, bancassurance and portfolio analytics.
9. Block G5 comprising brokerage which further comprises order or trade management, risk or margin, clearing and settlement, distribution, equities, mutual funds, derivatives and commodities.
10. Block G6 comprises securities which further comprises fund manufacturing, fund accounting, securities lending, depository management, custody, registrar & transfer and corporate actions.
11. Block G7 comprises cash management which further comprises payments, receivables or invoice management, collections or lock box, direct debits, remote deposit capture and channel finance.
12. Block G8 comprises liquidity management which further comprises pooling, sweeping, multi bank cash concentration, inter company loans, investment sweeps, netting and cash forecasting.
13. Block G9 comprises trade finance which further comprises letter of credit, open accounts, bills, guarantees, supply chain financing and factoring or forfaiting.
14. Block G10 comprises treasury which further comprises front or mid or back office, forex, money markets, fixed income securities, derivatives, equities and commodities.
15. Back end services include Block H - HUBS comprising Payment Service Hub (H1), Credit Service Hub (Collateral or Limits) (H2), Working Capital Hub (H3) and Enterprise Risk

Hub (Asset Liability Management(ALM) or market risk or credit risk or Operations(OPS) risk or pricing) (H4) .
16. Back Office which is represented under Block K covering Enterprise Recon (K1), General Ledger (K2), Fees and Charges (K3), Anti Money Laundering (K4), Imaging & Documentation (K5), Identity Management (K6), Customer Communication (K7), Privacy Card (K8) and Management Information System (MIS) (K9).
17. The four verticals shown in blue under Corporate Banking viz. Liquidity, Cash Management, Trade Finance and Treasury are shown under Global Transaction Banking, for example as illustrated by Figure 6.

The examples and specific details provided here by way of example, and illustrate the functionality, flexible and comprehensive utility of the GUB or the banking solution architecture and is not intended to limit the disclosed embodiments. For example, while levels between L0 to L3 have been disclosed, in some embodiments additional levels are defined to provide a comprehensive coverage of functionality, for example, a bank's functionality, in order to aid the design of bank solution architecture, in a manner similar to that described above. The banking solutions architecture attempts to envision the business in a comprehensive manner, providing mutually exclusive and exhaustive components, interrelationships, interdependencies, cross functionalities and the like. Furthermore, designing banking solutions using the banking solutions architecture as disclosed enables design of user friendly, customizable and modular interfaces and solutions.

The embodiments of the present invention may be embodied as methods, apparatus, electronic devices, and/or computer program products. Accordingly, the embodiments of the present invention may be embodied in hardware and/or in software (including firmware, resident software, microcode, etc.), which may be generally referred to herein as a "circuit" or "module". Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device. These computer program instructions may also be stored in a computer-usable or computer-readable memory that may direct a computer or other programmable data processing apparatus to function in a particular manner, such that the instructions stored in the computer usable or computer-readable memory produce an article of manufacture including instructions that implement the function specified in the flowchart and/or block diagram block or blocks.

The computer-usable or computer-readable medium may be, for example but not limited to, an electronic, magnetic, optical, electromagnetic, infrared, or semiconductor system, apparatus, device, or propagation medium. More specific examples (a non exhaustive list) of the computer-readable medium include the following: hard disks, optical storage devices, a transmission media such as those supporting the Internet or an intranet, magnetic storage devices, an electrical connection having one or more wires, a portable computer diskette, a random access memory (RAM), a read-only memory (ROM), an erasable programmable read-only memory (EPROM or Flash memory), an optical fiber, and a compact disc read-only memory (CD-ROM).

Computer program code for carrying out operations of the present invention may be written in an object oriented programming language, such as Java.RTM, Smalltalk or C++, and the like. However, the computer program code for carrying out operations of the present invention may also be written in conventional procedural programming languages, such as the "C" programming language and/or any other lower level assembler languages. It will be further appreciated that the functionality of any or all of the program modules may also be implemented using discrete hardware components, one or more Application Specific Integrated Circuits (ASICs), or programmed Digital Signal Processors or microcontrollers.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the present disclosure and its practical applications, to thereby enable others skilled in the art to best utilize the invention and various embodiments with various modifications as may be suited to the particular use contemplated.

The methods described herein may be implemented in software, hardware, or a combination thereof, in different embodiments. In addition, the order of methods may be changed, and various elements may be added, reordered, combined, omitted, modified, etc. All examples described herein are presented in a non-limiting manner. Various modifications and changes may be made as would be obvious to a person skilled in the art having benefit of this disclosure. Realizations in accordance with embodiments have been described in the context of particular embodiments. These embodiments are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of disclosures that follow. Finally, structures and functionality presented as discrete components in the example configurations may be implemented as a combined structure or component. These and other variations, modifications, additions, and improvements may fall within the scope of embodiments as defined in the disclosures that follow.

The foregoing is directed to embodiments of the present invention, other and further embodiments of the invention may be devised without departing from the basic scope thereof.

## Claims

1. A method for designing a system architecture comprising:
identifying a predefined product component corresponding to a banking solution requirement, the predefined product component selected from a banking solution architecture;
identifying a predefined process component corresponding to the banking solution requirement, the predefined process component selected from a product level architecture of the banking solutions architecture;
identifying a predefined services component corresponding to the banking solution requirement, the predefined services component selected from a process level architecture of the product level architecture;
optionally configuring at least one of the predefined product component, the predefined process component, and the predefined services component for meeting the banking solution requirement; and
providing the identified components including the optional configuration as the banking solution system architecture.

2. The method of claim 1, further comprising identifying a predefined scenario component corresponding to the banking solution requirement, the predefined scenario component selected from a scenario component level architecture of the services level architecture.

3. The method of claim 1, wherein the banking solutions requirement is a gap in an existing banking solution and at least one desired functionality, the gap determined based on comparing the existing banking solution and the at least one predefined component, and wherein the configuring comprises providing the at least one desired functionality in banking solution system architecture.

4. The method of claim 1, wherein the components define a mutually exclusive and exhaustive set of functionality for banking solutions.

5. A banking system designed using the method of claim 1.

6. An apparatus for designing a system architecture comprising:
a banking solutions architecture module comprising a product component, a services component, and a process component;
a comparison module for comparing a banking solution requirement with at least one component of the banking solutions architecture; and
a design module for designing a new banking solution system architecture based on the comparison, wherein the design module configures the at least one component based on the output of the comparison module.

7. The apparatus of claim 6, wherein the banking solution architecture comprises a scenario component.

8. The apparatus of claim 6, wherein the comparison module identifies a gap between an existing banking solution and at least one desired functionality, and wherein the design module designs the banking solution system architecture to include the at least one desired functionality.

9. The apparatus of claim 6, wherein the banking solution architecture defines a mutually exclusive and exhaustive set of functionality for banking solutions.

10. A banking system designed using the apparatus of claim 6.
